(19) Europäisches Patentamt
European Patent Office
Office européen des brevets

(11) **EP 0 992 020 B1**

(12) **EUROPÄISCHE PATENTSCHRIFT**

(45) Veröffentlichungstag und Bekanntmachung des Hinweises auf die Patenterteilung:
**19.03.2003 Patentblatt 2003/12**

(21) Anmeldenummer: **96943096.6**

(22) Anmeldetag: **12.12.1996**

(51) Int Cl.⁷: **G06K 19/16**, G06K 19/06

(86) Internationale Anmeldenummer:
**PCT/EP96/05562**

(87) Internationale Veröffentlichungsnummer:
**WO 98/026373 (18.06.1998 Gazette 1998/24)**

(54) **FLÄCHENMUSTER**

SURFACE PATTERN

MODELE SUPERFICIEL

(84) Benannte Vertragsstaaten:
**CH DE FR GB LI**

(43) Veröffentlichungstag der Anmeldung:
**12.04.2000 Patentblatt 2000/15**

(73) Patentinhaber: **OVD Kinegram AG**
**6301 Zug (CH)**

(72) Erfinder:
• **STAUB, René**
**CH-6330 Cham (CH)**
• **TOMPKIN, Wayne, Robert**
**CH-5408 Ennetbaden (CH)**

(74) Vertreter:
**LOUIS, PÖHLAU, LOHRENTZ & SEGETH**
**Postfach 3055**
**90014 Nürnberg (DE)**

(56) Entgegenhaltungen:
**EP-A- 0 238 043      EP-A- 0 247 471**
**EP-A- 0 712 012      WO-A-88/05387**

**Beschreibung**

Die Erfindung betrifft ein Flächenmuster der im Oberbegriff des Anspruchs 1 genannten Art.

Solche Flächenmuster weisen eine mikroskopisch feine Reliefstruktur auf und eignen sich als optische Sicherheitselemente zur Erhöhung der Fälschungssicherheit von Wertpapieren, Ausweisen, Zahlungsmitteln und ähnlichen Gegenständen.

Ein Flächenmuster gemäss dem Oberbegriff des Anspruchs 1 ist aus der europäischen Patentanmeldung EP 247 471 bekannt. Das Flächenmuster weist drei Teilflächen mit einer optisch wirksamen Beugungsstruktur auf. Diese Strukturen beugen sichtbares Licht entsprechend dessen Wellenlänge unter verschiedenen Beugungswinkeln. Die Profilhöhe der Furchen der drei Strukturen ist in jeder Teilfläche konstant, jedoch ist sie in jeder Teilfläche unterschiedlich so festgelegt, dass für einen bestimmten Beobachter die erste Struktur blaues Licht, die zweite Struktur grünes Licht und die dritte Struktur rotes Licht mit jeweils verschwindender bzw. möglichst geringer Beugungseffizienz beugt. Beim Kippen des Flächenmusters um eine zu den Furchen der Strukturen parallele Achse sollte nach der Lehre der Anmeldung also die erste Teilfläche bei einem ersten Betrachtungswinkel, die zweite Teilfläche bei einem zweiten Betrachtungswinkel und die dritte Teilfläche bei einem dritten Betrachtungswinkel dunkel erscheinen, d.h. ein schwarzer Punkt sollte beim kontinuierlichen Kippen sprunghaft seine Lage ändern. Beim Kippen des Flächenmusters ändert sich jedoch auch der Einfallswinkel des auftreffenden Lichtes und damit auch die optische Profilhöhe der Strukturen. Dabei ist die Bedingung, dass die vorbestimmte Spektralfarbe nicht oder nur mit sehr geringer Effizienz gebeugt wird, nicht mehr oder nur in Ausnahmefällen erfüllt. Weil die Profilhöhe entsprechend einem Minimum in der Beugungsintensität für eine vorbestimmte Spektralfarbe gewählt ist, sind auch die Teilflächen in den anderen Spektralfarben üblicherweise nur relativ schwach sichtbar. Ist die beleuchtende Lichtquelle zudem weit ausgedehnt, was bei diffusem Tageslicht im Freien oder unter einer Neonröhre der Fall ist, dann fällt das Licht nicht mehr aus einer einzigen definierten Einfallsrichtung, sondern aus vielen Einfallsrichtungen auf das Flächenmuster. Daher beugt das Flächenmuster gleichzeitig Licht verschiedener Farben in das Auge des Beobachters. Dieser Effekt wird noch durch die Rauhigkeit des Substrates verstärkt. Insbesondere papierene Substrate weisen eine relativ rauhe Oberfläche auf. Betrachtet der Beobachter das Flächenmuster also z.B. aus einer Richtung, in die bei Beleuchtung mit einer Punktlichtquelle und glatter Oberfläche des Substrates nur grünes Licht gebeugt wird, dann wird bei ausgedehnter Lichtquelle und rauher Oberfläche des Substrates auch rotes und blaues Licht in diese Richtung gebeugt: Der gewünschte Effekt ist somit stark vermindert oder überhaupt nicht mehr erkennbar.

Aus der EP-712'012 A ist ein Gitter mit einer Linienzahl von mehr als 2000 Linien/pro mm bekannt, das nur in der nullten Beugungsordnung als Farbfilter wirksam ist. In der Richtung der nullten Beugungsordnung ist das an den Strukturen der D2 reflektierte Licht nicht mehr weiss sondern farbig, da für bestimmte Tiefen der eingeprägten Struktur die eine oder die andere Farbe des Spektrums ganz ausgelöscht ist. Insbesondere kann bei einem Gitter mit einer Rechteck - Struktur durch Verändern des "peak to valley" - Verhältnisses zusätzlich die Farbsättigung bzw. Farbreinheit gesteuert werden. Ein Kippen der Gitterstruktur um eine Achse parallel zu den Gitterlinien verändert die Farbe nicht.

Der Erfindung liegt die Aufgabe zugrunde, ein Flächenmuster mit Beugungsstrukturen vorzuschlagen, die optisch variable Effekte erzeugen, die unter nahezu beliebigen Beleuchtungsverhältnissen deutlich sichtbar und somit von der Person auf der Strasse leicht überprüfbar sind.

Die Erfindung besteht in den im Anspruch 1 angegebenen Merkmalen. Vorteilhafte Ausgestaltungen ergeben sich aus den abhängigen Ansprüchen. Nachfolgend werden Ausführungsbeispiele der Erfindung anhand der Zeichnung näher erläutert.

Es zeigen:

| | |
|---|---|
| Fig. 1, 2 | ein Flächenmuster im Querschnitt und in der Draufsicht, |
| Fig. 3a-c | Beugungsintensitäten in Funktion der Wellenlänge des Lichtes, |
| Fig. 4a, b | das Flächenmuster bei Betrachtung unter ausgewählten Winkeln, |
| Fig. 5a-c | Beugungsintensitäten eines weiteren Flächenmusters, |
| Fig. 6 | eine Kennlinie, |
| Fig. 7 | ein Diagramm, |
| Fig. 8 | eine Art der Modulation der Profilhöhe des Flächenmusters und die Intensitäten des in die drei ersten Beugungsordnungen gebeugten Lichtes in Funktion der Profilhöhe, |
| Fig. 9a-c | das Flächenmuster bei Betrachtung aus drei unterschiedlichen Beugungsordnungen zugeordneten Richtungen, |
| Fig. 10 | das Flächenmuster mit einer Teilfläche, deren Kontur die Erkennung variierender optischer Effekte erleichtert, |
| Fig. 11 | das Flächenmuster mit einer anderen Teilfläche mit gut erkennbaren variierenden optischen Effekten, |
| Fig. 12 | ein Flächenmuster mit referenzierenden Elementen, |

Fig. 13    ein Flächenmuster mit linienförmigen Elementen, und

Fig. 14    ein weiteres Flächenmuster.

Stellvertretend für mathematische Methoden, Algorithmen und numerische Computerprogramme zur rigorosen Berechnung der Beugungseigenschaften metallischer Gitter seien noch erwähnt: Das Buch "Electromagnetic Theory of Gratings" von R. Petit, Springer Verlag, der Artikel "Rigorous coupledwave analysis of metallic surface-relief gratings" von M. G. Moharam und T. K. Gaylord, erschienen im Journal of the Optical Society of America A, Vol. 3(11), pp. 1780-1787, 1986, sowie das Softwarepaket "GSOLVER V2.0", das Berechnungen nach diesen Ansätzen ermöglicht.

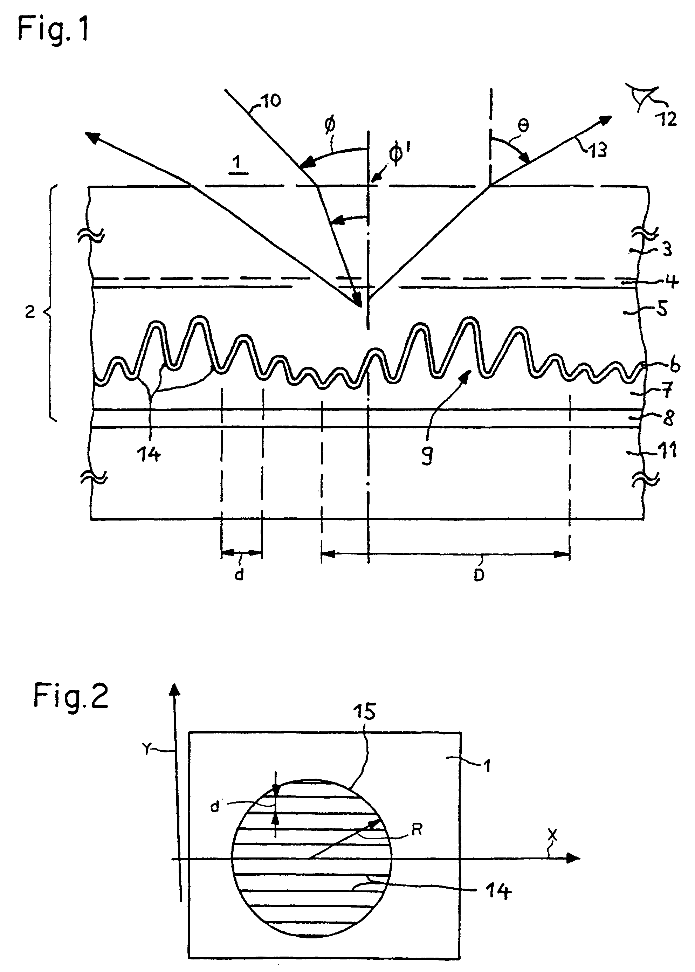

Die Fig. 1 zeigt im nichtmassstäblichen Querschnitt ein erstes Flächenmuster 1 mit Beugungsstrukturen zur Erzeugung optisch variabler Effekte. Das Flächenmuster 1 ist als Schichtverbund 2 ausgebildet. Auf eine Trägerschicht 3 sind in der angegebenen Reihenfolge eine Zwischenschicht 4, eine erste Lackschicht 5, eine wenigstens teilweise reflektierende Reflexionsschicht 6, eine zweite Lackschicht 7 und eine Kleberschicht 8 aufgebracht. Die Schichten 3 bis 8 bilden den Schichtverbund 2. Zwischen den Lackschichten 5 und 7 sind mikroskopisch feine Reliefstrukturen 9 eingebettet, welche durch die Lackschicht 5 hindurch unter dem Einfallswinkel $\phi$ auftreffendes Licht 10 beugen und mindestens teilweise reflektieren. Der Schichtverbund 2 wird auf ein zu schützendes Substrat 11, z.B. ein Dokument, aufgeklebt, wobei die Kleberschicht 8 auf dem Substrat 11 aufliegt. Nach dem Aufkleben des Flächenmusters 1 auf das Substrat 11 wird die Trägerschicht 3 abgezogen. Ein Beobachter 12, der das Flächenmuster 1 aus einer Richtung betrachtet, die mit der Normalen auf das Flächenmuster 1 den Winkel $\theta$ einschliesst, sieht das von der Seite der ersten Lackschicht 5 auf das Flächenmuster 1 auftreffende und an den Reliefstrukturen 9 reflektierte und unter dem Beugungswinkel $\theta$ gebeugte Licht 13.

Die Dicke und der Brechungsindex n legen die optischen Eigenschaften der Reflexionsschicht 6 fest, z.B. ob die Reflexionsschicht 6 für sichtbares Licht teilweise durchsichtig und die Oberfläche des Substrates 11 sichtbar ist, oder ob die Reflexionsschicht 6 undurchsichtig ist.

Die Grenzfläche zwischen den Lackschichten 5 und 7 kann die Funktion der Reflektionsschicht 6 übernehmen, falls sich die Materialien für die Lackschichten 5 und 7 im Brechungsindex unterscheiden.

In einer einfachen Ausführung des Flächenmusters 1 bilden die Reliefstrukturen 9 innerhalb wenigstens einer Teilfläche ein Gitter G mit konstanter Linienzahl L und variierender geometrischer Profilhöhe $h_g$. Das Gitter G erstreckt sich in einer Ebene, deren kartesische Koordinaten mit x und y bezeichnet sind. In der Fig. 1 ist die x-Richtung senkrecht zur Zeichenebene orientiert und die Furchen 14 des Gitters G sind parallel zur x-Richtung gewählt. Die geometrische Profilform A des Gitters G ist durch eine Funktion A(x, y)=g(x, y)*F(x, y) beschreibbar, wobei die Funktion g(x, y) die Profilform eines Gitters G' mit konstanter Profilhöhe und die Funktion F(x, y) die Modulation der Profilhöhe des Gitters G' beschreibt. Z.B. gilt für ein sinusförmiges Gitter G' mit zur x-Achse parallelen Furchen 14

$$g(x, y) = sin\left(\frac{2\pi}{d}(y - y_0)\right),$$

wobei d=1/L den Abstand der Furchen 14 und $y_0$ einen beliebigen Bezugspunkt bezeichnen. Die Modulationsfunktion F(x, y) variiert langsam im Vergleich zum Abstand d der Furchen 14 des Gitters G'. Die Modulationsfunktion F kann aperiodisch oder periodisch sein. Bei einer periodischen Modulationsfunktion F wird die Modulationslänge mit D bezeichnet. Die Beugungseigenschaften des Flächenmusters 1 sind bestimmt durch die optischen Eigenschaften der Reflexionsschicht 6 und die optische Profilhöhe h der Reliefstrukturen 9. Die optische Profilhöhe h ist das Produkt aus der geometrischen Profilhöhe $h_g$ der Reliefstrukturen 9 und dem Brechungsindex n der Lackschicht 5, die die Reliefstrukturen 9 auf der dem Betrachter zugewandten Seite bedeckt.

Beispiel 1

Die Fig. 2 zeigt das Flächenmuster 1 mit der einzigen Teilfläche in der Draufsicht. Die Teilfläche ist ein Kreis 15 mit dem Radius R. Die Profilform des Gitters G' ist sinusförmig. Die optische Profilhöhe h des Gitters G im Mittelpunkt $(x_0, y_0)$ des Kreises 15 beträgt 150 nm und nimmt gegen den Rand linear zu. Auf dem Rand des Kreises 15 beträgt die optische Profilhöhe h = 900 nm. Die Profilhöhe des Gitters G' ist also mit einer aperiodischen, stückweise stetigen, rotationssymmetrischen Funktion F moduliert. Die geometrische Profilform A(x, y) des Gitters G kann beschrieben werden durch die Gleichung

$$A(x,y) = \frac{1}{n}\left( \frac{150}{2}\,nm + \frac{750}{2}\,nm * \frac{\sqrt{(x-x_0)^2 + (y-y_0)^2}}{R} \right) * \sin\left( \frac{2\pi}{d}(y-y_0) \right) \text{ für } (x-x_0)^2 + (y-y_0)^2 \leq R^2, \quad (1)$$

wobei x und y die kartesischen Koordinaten eines beliebigen Punktes und $x_0$ und $y_0$ die kartesischen Koordinaten des Mittelpunktes des Kreises 15 bezeichnen. Die geometrische Profilhöhe $h_g$ der Gitterstruktur am Ort (x, y) beträgt dann

$$h_g = \frac{2}{n}\left( 75\,nm + 375\,nm * \frac{\sqrt{(x-x_0)^2 + (y-y_0)^2}}{R} \right).$$

Das gewählte Beispiel entspricht einem Gitter G mit einer sinusförmigen Profilform, wobei die Profilhöhe von Furche 14 zu Furche 14 langsam ändert, da der Radius R typisch einige Millimeter beträgt.

Die Linienzahl ist mit L=1250 Linien/mm vergleichsweise hoch gewählt und bewirkt, dass bei senkrechtem Einfall des weissen Lichts 10, d.h. $\phi$=0, innerhalb eines Betrachtungswinkelbereiches von $\theta$=0° bis 60°, unter dem der Beobachter 12 (Fig. 1) das Flächenmuster 1 normalerweise betrachtet, im sichtbaren Wellenlängenbereich abgesehen von der Spiegelreflexion nur eine einzige Beugungsordnung auftritt. Der Beobachter 12 sieht dann das Flächenmuster 1 z.B. unter einem Betrachtungswinkel von $\theta \cong 35°$ als blaue Fläche, unter einem Betrachtungswinkel von $\theta \cong 45°$ als grüne Fläche und unter einem Betrachtungswinkel von $\theta \cong 55°$ als rote Fläche. Bei stetiger Änderung des Betrachtungswinkels von $\theta \cong 35°$ bis $\theta \cong 55°$ findet natürlich ein kontinuierlicher Übergang in der Farbe statt. Wie nachfolgend erläutert wird, erscheint das Flächenmuster 1 nicht gleichmässig hell, sondern es sind, entsprechend der Rotationssymmetrie der Profilhöhe h(x, y), konzentrische Ringe mit der dem Betrachtungswinkel $\theta$ entsprechenden Farbe von unterschiedlicher Helligkeit und in unterschiedlicher Anzahl sichtbar.

Der Klarheit wegen sei hier noch folgende Bemerkung angebracht. Die auftretenden optischen Effekte sind einerseits einfacher beschreibbar und leichter verständlich, wenn die Lage des Flächenmusters 1 bezüglich des einfallenden Lichtes 10 fixiert ist und der Beobachter 12 (Fig. 1) sich verschiebt, um seinen Betrachtungswinkel dem gewünschten Beugungswinkel $\theta$ anzupassen. Andererseits wird eine Person auf der Strasse üblicherweise nicht ihren Kopf hin- und herbewegen, um die hier beschriebenen Effekte zu verifizieren, sondern das Flächenmuster 1 kippen und/oder drehen.

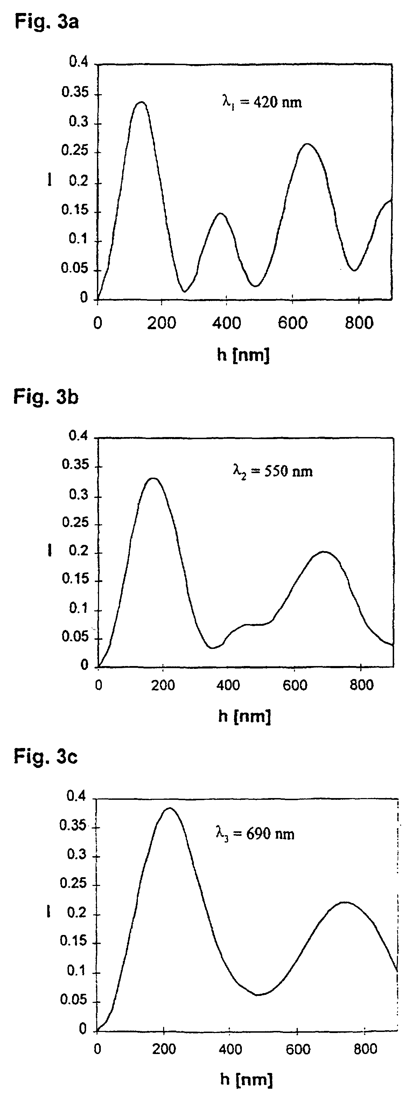

Die Fig. 3a bis 3c zeigen die Intensität des in die erste Beugungsordnung gebeugten Lichtes für die drei ausgewählten Wellenlängen $\lambda_1$ = 420 nm (blau), $\lambda_2$ = 550 nm (grün) und $\lambda_3$ = 690 nm (rot) in Funktion der optischen Profilhöhe h. Die Intensitätskurven sind gemäss der eingangs zitierten rigorosen Theorie berechnet und gelten für unpolarisiertes Licht, das senkrecht auf das Flächenmuster 1 auftrifft, wobei der Berechnung als Material für die Reflexionsschicht 6 Aluminium und als Brechungsindex der Lackschicht 5 ein Wert von n = 1.5 zugrunde gelegt wurden. Bei $\lambda_1$ = 420 nm (blau) treten im Bereich der optischen Profilhöhe h von 150 nm bis 900 nm vier helle Zonen auf. Bei $\lambda_2$ = 550 nm (grün) und $\lambda_3$ = 690 nm (rot) treten hingegen nur zwei helle Zonen auf, deren Breite und Lage jedoch unterschiedlich ist.

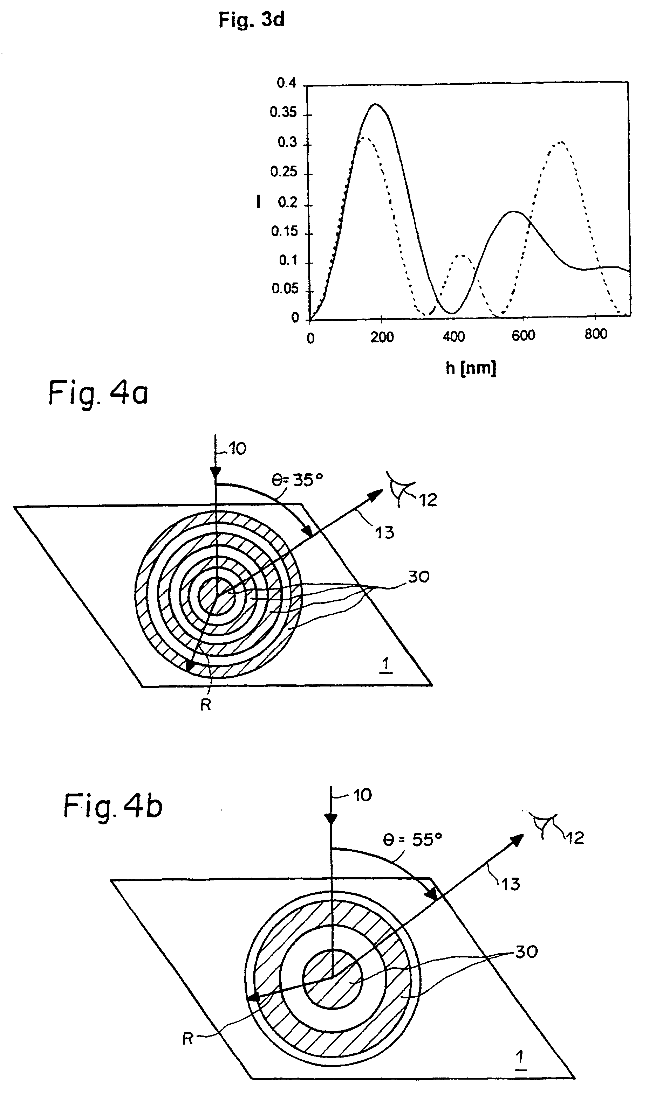

Bei kontinuierlicher Vergrösserung des Betrachtungswinkels von $\theta$ = 35° auf 55° sieht der Beobachter 12 somit, wie auf dem fixierten Flächenmuster 1 helle kreisförmige Ringe kontinuierlich gegen den Rand wandern, wobei die Farbe der Ringe das Regenbogenspektrum von blau bis rot durchläuft, die Anzahl der hellen Ringe abnimmt und die Breite der hellen Ringe leicht zunimmt. Zur Illustration zeigen die beiden Fig. 4a und b das Flächenmuster 1 bei Betrachtung unter den ausgewählten Winkeln $\theta$ = 35° und $\theta$ = 55°. Im ersten Fall leuchten vier helle blaue Kreisringe 30, im zweiten Fall nur noch zwei helle rote Kreisringe 30.

Beim Kippen des Flächenmusters 1 um eine zu den Furchen 14 des Gitters parallele Achse ändert der Einfallswinkel $\phi$ (Fig. 1) des auftreffenden Lichtes 10. Auf das ruhende Auge des Beobachters trifft dann nacheinander das in die erste Beugungsordnung gebeugte Licht 13 einer anderen Spektralfarbe. Die Änderung des Einfallswinkels $\phi$ bedeutet aber, dass die wirksame optische Profilhöhe h entsprechend dem Kosinus des Einfallswinkels $\phi'$ (Fig. 1) in der Lackschicht 5 kleiner wird. Dies hat zur Folge, dass bei verschiedenen Betrachtungswinkeln $\theta(\phi)$, bei denen dieselbe Farbe erkannt wird, bereits infolge dieses Kippens allein die Breite und Helligkeit der hellen Zonen leicht ändert. Die Verkleinerung der wirksamen optischen Profilhöhe ist begrenzt auf einen Bruchteil der optischen Profilhöhe h, da bei einer Änderung des Einfallswinkels $\phi$, z.B. von 0° auf 30°, der Winkel $\phi'$ in der Lackschicht 5 typischerweise von 0° auf 20° ändert und der Kosinus des Einfallswinkels $\phi'$ um typisch 6 Prozent ändert. Somit bleiben die beschriebenen optischen Effekte qualitativ erhalten.

Bei Beleuchtung des Flächenmusters 1 unter normalen Beleuchtungsbedingungen, d.h. mit einer winkelmässig ausgedehnten Lichtquelle, z.B. bei Tageslicht im Freien oder unter einer Neonröhre, ist der Einfallswinkel $\phi$ (Fig.

1) des Lichtes 10 nicht scharf definiert, sondern umfasst einen grösseren Winkelbereich. Demzufolge beugt das Flächenmuster 1 in die dem Betrachtungswinkel θ zugeordnete Richtung nicht das Licht einer einzigen Spektralfarbe, sondern Licht, das aus benachbarten Spektralfarben zusammengesetzt ist. Wegen der hohen Linienzahl von 1250 Linien/mm liegen die stark verschiedenen Farben winkelmässig weit auseinander, d. h. die sich in einer Betrachtungsrichtung überlagernden Spektralfarben weisen verwandte Farbtöne, z.B. vorwiegend rötliche oder vorwiegend blaue Farbtöne auf. Ist zudem die Oberfläche des Substrats 11 rauh, was bei Papier immer der Fall ist, dann verstärkt sich die Überlappung verschiedener Spektralfarben weiter. Die Aufweitung einer Spektralfarbe infolge der Rauhigkeit der Oberfläche eines typischen Papiers beträgt nämlich etwa ±5°, d.h. das Licht einer Spektralfarbe wird nicht nur unter dem Beugungswinkel θ, sondern etwa unter den Winkeln θ-5° bis θ+5° gebeugt. Die Mischfarben weisen wegen der hohen Linienzahl noch immer erkennbare Farbtöne auf. Die beschriebenen Effekte bleiben daher selbst bei ausgedehnter Lichtquelle und rauher Oberfläche des Substrates 11 qualitativ erhalten.

In der nullten Beugungsordnung, d. h. bei Spiegelreflexion, sind unterschiedliche Farben und Farbschattierungen erkennbar, die im obigen Beispiel ebenfalls ein konzentrisches Muster bilden. Wird der Einfallswinkel φ und somit der Beugungswinkel θ = φ der nullten Ordnung verändert, so erfahren die konzentrischen Farbringe eine radiale Bewegung, da die wirksame optische Profiltiefe beim Kippen wiederum ändert.

Das Flächenmuster 1 verändert auch in vorbestimmter Weise die Polarisation des gebeugten und reflektierten Lichts 13 (Fig. 1). Die Fig. 3d zeigt die Intensitäten des in die erste Beugungsordnung gebeugten Lichtes für die Wellenlänge 550 nm in den beiden Polarisationsebenen senkrecht (ausgezogene Linie 28) bzw. parallel (gestrichelte Linie 29) zu den Gitterfurchen 14 (Fig. 1), welche in der Summe die Intensitätskurve der Fig. 3b ergeben. Ist die Stellung eines über das Flächenmuster 1 gehaltenen Polarisationsfilters für das Licht gemäss der ausgezogenen Kurve eingestellt und wird anschliessend die Stellung des Polarisationsfilters um +90° verändert, geht für den Beobachter das Muster der hellen Ringe gemäss der ausgezogenen Kurve in das Muster entsprechend der gestrichelten Kurve über. Betrachtet also ein Beobachter das Flächenmuster 1 (Fig. 1) bei senkrecht einfallendem Licht unter einem Winkel von etwa 45° durch das Polarisationsfilter, so wird er beobachten, wie sich das Flächenmuster 1 als ein von der Stellung des Polarisationsfilters abhängiges Helligkeitsmuster darstellt, d.h. die Anzahl und die Lage der konzentrischen Ringe variiert beim Drehen des Polarisationsfilters. Analog wird er auch in der nullten Beugungsordnung, d.h. in Spiegelreflexion, eine von der Stellung des Polarisationsfilters abhängige Anordnung von konzentrischen Farbringen erkennen.

Beispiel 2

Bei einem weiteren Flächenmuster 1 (Fig. 1) weisen die Reliefstrukturen 9 im Kreis 15 (Fig. 2) sägezahnförmige Furchen 14 (= "Blazegitter") auf, wobei die geometrische Profilhöhe $h_g$ der Furchen 14 mit einer Sinusfunktion

$$\sin\left(\frac{2\pi}{D}y\right)$$

moduliert ist. Die geometrische Profilhöhe $h_g$ ist dann gegeben durch

$$h_g(x, y) = h_o * (1 + \beta * \sin\left(\frac{2\pi}{D}y\right)), \qquad (2)$$

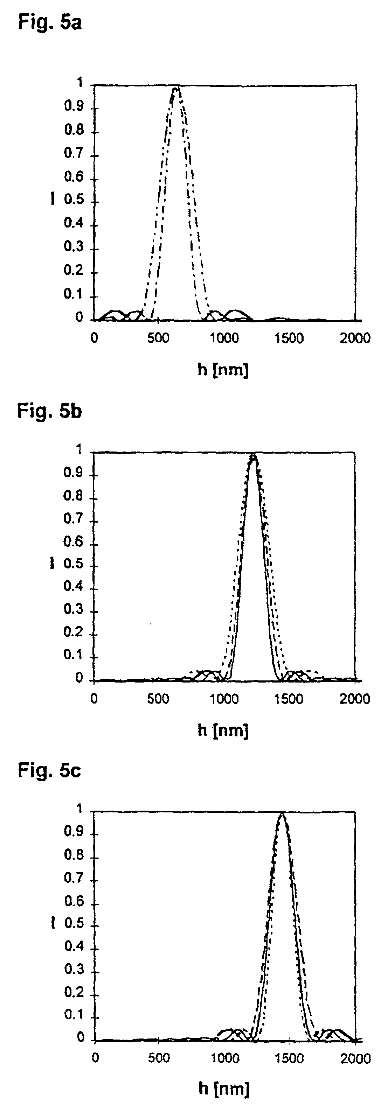

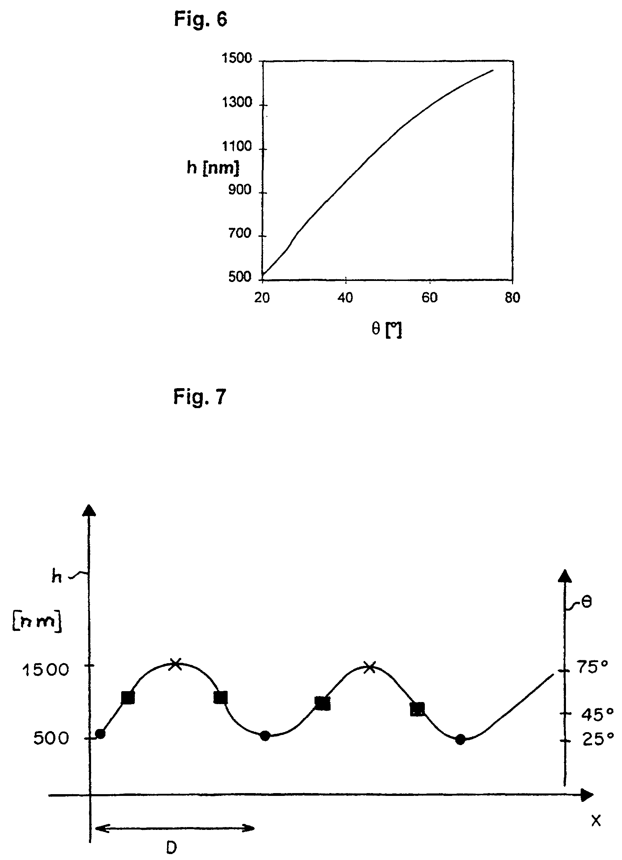

wobei β eine Zahl zwischen 0 und 1 und $h_0$ eine Konstante ist. Die minimale und die maximale optische Profilhöhe h der Furchen 14 betragen 500 nm bzw. 1500 nm. Die Periode D der modulierenden Sinusfunktion liegt typisch im Millimeterbereich. Die Linienzahl L dieses Blazegitters ist mit etwa 330 Linien/mm vergleichsweise klein gewählt. Die Fig. 5a bis 5c zeigen die Intensität des in verschiedene Beugungsordnungen gebeugten Lichtes in Funktion der optischen Profilhöhe h bei senkrechtem Einfall des Lichtes 10, d.h. φ = 0, auf das Flächenmuster 1. Unter dem Beugungswinkel θ = 25° wird das Licht im sichtbaren Wellenlängenbereich in die zwei Beugungsordnungen m=2 und m=3 mit höchster Intensität gebeugt, wenn die optische Profilhöhe h etwa im Bereich von 500 bis 800 nm liegt. Unter dem Beugungswinkel θ = 55° weisen jedoch die drei Beugungsordnungen m=4, m=5 und m=6 höchste Intensität auf, wobei die optische Profilhöhe h etwa im Bereich von 1100 bis 1300 nm liegen muss. Unter dem Beugungswinkel θ = 75° schliesslich treten die drei Beugungsordnungen m=5, m=6 und m=7 mit der höchsten Intensität auf, wenn die optische Profilhöhe h etwa im Bereich von 1300 bis 1600 nm liegt. Wegen der sägezahnförmigen Profilform überlappen sich die Beugungswinkelbereiche der verschiedenen Beugungsordnungen für gleiche Profilhöhen h relativ stark, wie die in den Fig. 5 durch die Ausbildung der Kurvenlinien zeichnerisch dargestellt ist. Jeder optischen Profilhöhe h kann deshalb ein bestimmter Beugungswinkel zugeordnet werden, unter dem Zonen des Flächenmusters 1 mit der entsprechenden optischen Profilhöhe h am hellsten erscheinen. Diese Zuordnung ist über einen weiten Bereich von Beugungswinkeln θ annähernd linear, wie aus der Fig. 6 ersichtlich ist.

Die Modulation der Profilhöhe h mit einer in y-Richtung periodischen, hier sinusförmigen, Funktion hat nun zur Folge, dass bei normalen Beleuchtungsverhältnissen die verschieden hellen Zonen auf dem Flächenmuster 1 helle und dunkle Streifen sind, die senkrecht zur y-Achse verlaufen. Anhand der Fig. 7 wird nun das optische Verhalten der Streifen erläutert. Entlang der y-Achse variiert die Profilform A gemäss der Gleichung (2). Auf der Ordinate der Fig. 7 sind die optische Profilhöhe h und entsprechend der in der Fig. 6 dargestellten Kennlinie der Beugungswinkel θ eingetragen, unter dem die Streifen mit der Profilhöhe h am hellsten erscheinen. Wenn der Beobachter das Flächenmuster 1 unter einem Betrachtungswinkel von $\theta \cong 25°$ betrachtet, erscheinen ihm diejenigen Streifen hell, in welchen die optische Profilhöhe h einen minimalen Wert aufweist. Pro Periode D ist somit ein einziger heller Streifen, dargestellt mit einem Punkt •, sichtbar. Beim Kippen des Flächenmusters 1 um die x-Achse werden mit zunehmendem Betrachtungswinkel die Streifen sichtbar, die Zonen mit zunehmender Profilhöhe h entsprechen. Aus der Fig. 7 ist ersichtlich, dass dann pro Periode D zwei helle Streifen sichtbar sind. Die beispielsweise bei $\theta \cong 45°$ hell leuchtenden Streifen sind mit einem schwarzen Quadrat ■ dargestellt. Bei $\theta \cong 75°$ erscheinen die mit einem Stern * markierten Streifen hell, die den Zonen mit der maximalen Profilhöhe h = 1500 nm entsprechen. Auch hier gibt es wieder einen einzigen hellen Streifen pro Periode D. Bei einem Betrachtungswinkel von $\theta \cong 25°$ sind somit auf dem Flächenmuster 1 helle Streifen im Abstand der Periode D sichtbar, die durch dunkle Streifen getrennt sind. Bei kontinuierlicher Änderung des Betrachtungswinkels von $\theta \cong 25°$ auf $\theta \cong 75°$ teilen sich die hellen Streifen in zwei helle Streifen, die in entgegengesetzter y-Richtung wandern, bis sie sich bei $\theta \cong 75°$ mit den benachbarten Streifen wiederum zu einem einzigen hellen Streifen vereinigen. Die bei $\theta \cong 75°$ sichtbaren Streifen sind gegenüber den bei $\theta \cong 25°$ sichtbaren Streifen um eine halbe Periodenlänge D/2 versetzt. Da die Spektralfarben der verschiedenen Beugungsordnungen jeweils unter einem anderen Beugungswinkel θ auftreten, ist die Farbe der aus einer bestimmten Richtung θ erkennbaren hellen Streifen üblicherweise eine Mischfarbe, die zudem leicht vom Betrachtungswinkel θ abhängig ist.

Die örtliche differentielle Ableitung der Funktion, mit der die optische Profilhöhe h moduliert ist, ist nicht konstant. Der Umfang des Modulationstiefenbereichs, welcher unter einem vorbestimmten Betrachtungswinkel θ hell erscheint, beträgt in diesem Beispiel etwa 300 nm und ist annähernd unabhängig von der Profilhöhe h. Somit wirkt sich die Steilheit der Ableitung direkt auf die Breite der hellen Zonen auf, die unter dem Betrachtungswinkel θ hell leuchten. Beim Kippen um die x-Achse ändert sich also nicht nur die Lage der hellen und dunklen Zonen, sondern auch deren Ausdehnung in y-Richtung entsprechend der Ableitung der modulierenden Funktion.

## Beispiel 3

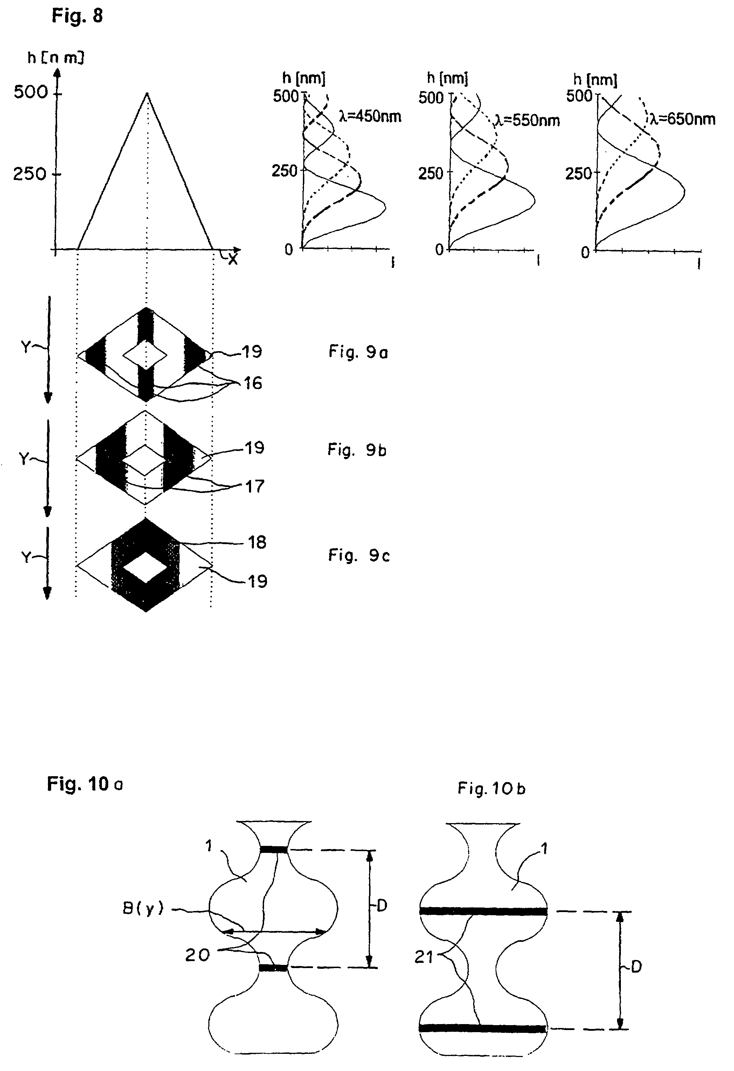

Dem dritten Beispiel ist ein Gitter G zugrunde gelegt, dessen Linienzahl mit L=500 Linien/mm derart gewählt ist, dass im sichtbaren Bereich bei senkrechtem Einfall des Lichts 10 (Fig. 1) und glatter Oberfläche des Substrats 11 (Fig. 1) drei Beugungsordnungen auftreten, die winkelmässig getrennt sind: Die erste Beugungsordnung umfasst den Winkelbereich von 13° bis 19°, die zweite Beugungsordnung den Winkelbereich von 27° bis 41° und die dritte Beugungsordnung den Winkelbereich von 42° bis 77°. Die Furchen 14 (Fig. 1) verlaufen diesmal parallel zur x-Richtung. Die Modulation der optischen Profilhöhe h des Flächenmusters 1 (Fig. 9) erfolgt entlang der x-Richtung gemäss der in der Fig. 8 gezeigten Funktion F(x). Weiter zeigt die Fig. 8 die Intensität des in die erste, die zweite und die dritte Beugungsordnung gebeugten Lichtes, wie es die einfache skalare Theorie ergibt, für die drei Wellenlängen $\lambda_1$ = 450 nm (blau), $\lambda_2$ = 550 nm (grün) und $\lambda_3$ = 650 nm (rot).

Bei Beleuchtung des Flächenmusters 1 mit einer winkelmässig ausgedehnten Lichtquelle beugt das Flächenmuster 1 in die dem Betrachtungswinkel θ zugeordnete Richtung nicht das Licht einer einzigen Spektralfarbe, sondern Mischlicht, das aus mehreren Spektralfarben zusammengesetzt ist. Die allenfalls vorhandene Rauhigkeit der Oberfläche des Substrats 11 verstärkt die Überlappung verschiedener Spektralfarben weiter. Bei einer Linienzahl von L=500 Linien/mm bleiben die drei Beugungsordnungen dennoch winkelmässig annähernd getrennt.

Beim Kippen des Flächenmusters 1 um die x-Achse fällt daher nacheinander Licht der ersten, der zweiten und schliesslich der dritten Beugungsordnung in das Auge des Beobachters. Die drei Fig. 9a - c zeigen qualitativ die Helligkeitsverteilung des Flächenmusters 1 für die Betrachtungswinkel $\theta_1$ = 16°, $\theta_2$ = 34° und $\theta_3$ = 60°. Der Beobachter sieht unter diesen ausgewählten Betrachtungswinkeln also in die erste oder in die zweite oder in die dritte Beugungsordnung gebeugtes Licht als Mischfarbe, die von der Ausdehnung der Lichtquelle und der Rauhigkeit des Substrates abhängig ist. Diese Mischfarbe variiert in der Regel von Bcugungsordnung zu Beugungsordnung.

Wie aus den in der Fig. 8 gezeigten Intensitätskurven ableitbar ist, erscheinen unter dem Winkel $\theta_1$ = 16° Zonen 16 hell, deren optische Profiltiefe h entweder im Bereich des ersten oder des zweiten Maximums der Intensitätskurven der ersten Beugungsordnung liegt. Unter den Winkeln $\theta_2$ = 34° und $\theta_3$ = 60° sind diejenigen Zonen 17 bzw. 18 hell. deren optische Profiltiefe h im Bereich des einzigen Maximums der Intensitätskurven der zweiten bzw. dritten Beugungsordnung liegt. Beim Kippen um die x-Achse wandern somit helle Streifen entsprechend der Modulationsfunktion F(x) in oder entgegengesetzt zur x-Richtung, wobei sich jeweils insbesondere beim Wechsel von einer Beugungsordnung zur nächsten ein markanter Wechsel der Lage und Breite der hellen und dunklen Streifen einstellt.

Gemäss den obigen Angaben sind diese Änderungen deutlich wahrnehmbar, wenn der Betrachtungswinkel von etwa 19° (erste Beugungsordnung) zu etwa 27° (zweite Beugungsordnung) wechselt oder beim Übergang von der zweiten zur dritten Beugungsordnung den Wert von etwa 41° überschreitet. Die sich von den Ecken des Flächenmusters 1 ausbreitenden dunklen Zonen 19 verbreitern sich beim Kippen jeweils beim Wechsel von einer Beugungsordnung zur nächsten ebenfalls markant, da sich das erste Maximum der Intensitätskurven mit zunehmender Beugungsordnung zu grösseren Profilhöhen h verschiebt. Beim kontinuierlichen Kippen des Flächenmusters 1 um eine zu seinen Furchen 14 parallele Achse ändert die Lage der hellen und dunklen Zonen also teilweise stetig (innerhalb einer Beugungsordnung) und teilweise sprunghaft (beim Übergang von einer Beugungsordnung zur nächsten).

Besonders geeignet zur Referenzierung der Bewegung der hellen Zonen ist auch die geometrische Form oder Kontur des Flächenmusters 1. Bei einem ersten, in den Fig. 10a und 10b gezeigten Beispiel variiert die geometrische Berandung des Flächenmusters 1 ebenfalls mit der Periode D: Die Breite B(y) des Flächenmusters I in x-Richtung ist in y-Richtung mit der Periode D moduliert. Die veränderte y-Lage der hellen und dunklen Zonen äussert sich somit zusätzlich entsprechend der Breite B(y) in einer unterschiedlichen Länge der wahrgenommenen Streifen und kann daher sehr einfach erkannt werden. In der Fig. 10a sind die Streifen 20 dargestellt, die bei Ausgestaltung gemäss dem Beispiel 2 unter dem Betrachtungswinkel $\theta \cong 25°$ hell leuchten, in der Fig. 10b sind die Streifen 21 dargestellt, die unter dem Betrachtungswinkel $\theta \cong 75°$ hell leuchten. Wegen der speziellen Kontur des Flächenmusters 1 sind die Streifen 20 markant kürzer als die Streifen 21. Die Kontur des Flächenmusters 1 stellt ein zusätzliches Gestaltungselement dar und die Ausdehnung und die Lage der hellen Streifen widerspiegeln die Kontur des Flächenmusters (1) bei einer Änderung des Betrachtungswinkels $\theta$.

Die Berandung kann auf vielfältige Weise erzielt werden: Die das Flächenmuster 1 umschliessende Fläche kann z.B. eine Mattstruktur oder ein Spiegel sein. Weiter kann sie durch lokales Entfernen der Reflexionsschicht 6 (Fig. 1) oder durch nachträgliches Bedrucken mit einer opaken Farbe so verändert werden, dass sie nicht mehr beugungsoptisch wirksam ist. Möglich ist auch ein lokaler Transfer des Flächenmusters 1 auf das Substrat 11 mittels eines Stempels, bei dem nur das Flächenmuster 1, nicht aber die das Flächenmuster 1 umgebende Fläche übertragen werden.

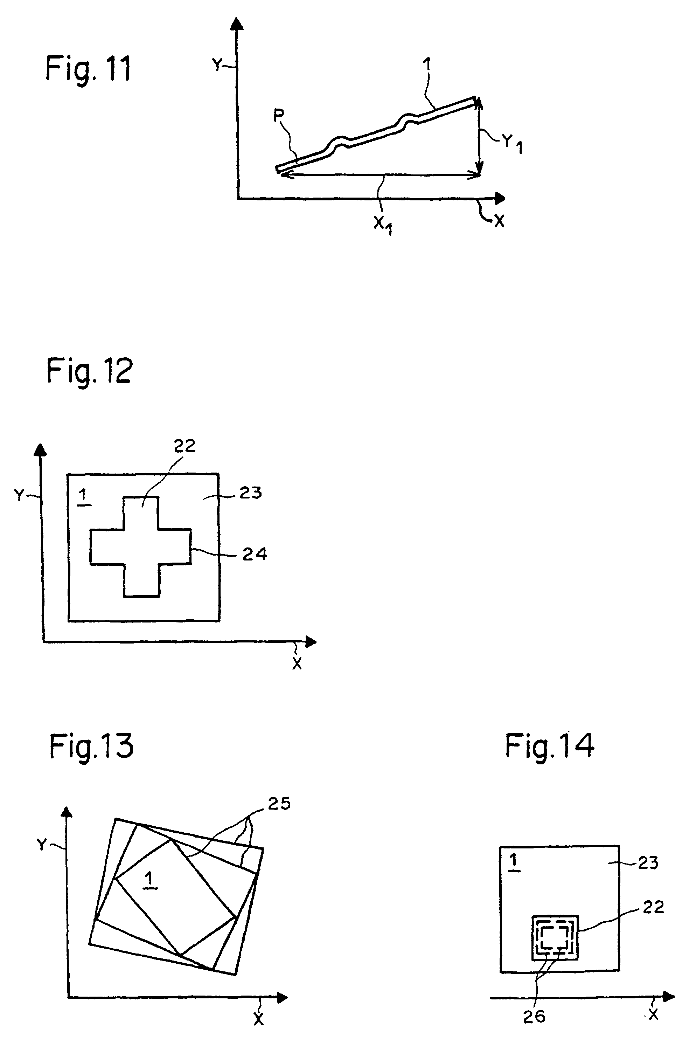

Bei einem zweiten, in der Fig. 11 gezeigten Beispiel stellt das Flächenmuster 1 eine linienartige Fläche dar. Bewegt sich ein Punkt P entlang der Linie in y-Richtung über eine Strecke $y_1$, dann bewegt sich der Punkt P in x-Richtung um eine Strecke $x_1$, die deutlich grösser, z.B. um einen Faktor 10 grösser, als die Strecke $y_1$ ist. Beim Kippen ändert sich wiederum die Lage der hellen Zonen des Flächenmustes 1, wobei nun aber eine kleine Änderung der y-Lage der hellen Zonen mit einer grossen Änderung der x-Lage der hellen Zonen gekoppelt ist. Die Verschiebung der hellen Zonen beim Kippen ist deshalb sehr gut als Wanderung eines hellen Punktes oder Flecken entlang der Linie erkennbar.

Die Kombination mehrerer solcher Teilflächen auf einer als Hintergrund dienenden Fläche bildet ein Flächenmuster 1, das Bewegungen heller und dunkler Zonen in mannigfaltiger Art und Weise kombiniert.

Erfolgt die Modulation der Profilhöhe h mit der Sinusfunktion $\sin(\vec{k}*\vec{x})$, so dass die Profilhöhe h proportional zu $1 + \beta^* \sin(\vec{k}*\vec{x})$ ist, wobei die Länge des k-Vektors $\frac{2\pi}{D}$ beträgt und der k-Vektor mit der x-Achse einen Winkel $\alpha$ einschliesst, dann verlaufen die Streifen entlang einer Richtung, die mit der x-Achse den Winkel $\alpha - 90°$ einschliesst und sie wandern beim Kippen des Flächenmusters 1 um die x-Achse entlang der Richtung, die durch den Winkel $\alpha$ definiert ist. Auch in diesem Fall kann die geometrische Kontur (Form) des Flächenmusters 1 derart an die Bewegung der hellen Streifen angepasst sein, dass deren Länge bei der Bewegung markant ändert.

Die bisher beschriebenen Flächenmuster 1 weisen eine einzige optisch wirksame Fläche auf, in der die Furchen 14 (Fig. 1) des zugrundeliegenden Gitters parallel sind. Es lassen sich nun weitere Flächenmuster mit mehreren nebeneinander angeordneten beugungswirksamen Teilflächen und/oder überlagerten grafischen, z.B. drucktechnisch aufgebrachten, Motiven bilden, bei denen die Orientierung der Furchen der Gitter, die Profilform der Gitter und/oder die Art der Modulation der optischen Profilhöhe h unterschiedlich sind, so dass die vorbestimmten Helligkeitsveränderungen derart charakteristisch und für den Menschen leicht im Gedächtnis einprägbar sind, dass die Person auf der Strasse das originale Flächenmuster 1 leicht von Nachahmungen unterscheiden kann.

Die Fig. 12 zeigt ein solches Flächenmuster 1 mit zwei Teilflächen 22 und 23, die ein Kreuz und einen Hintergrund darstellen. Beide Teilflächen 22, 23 weisen eine Gitterstruktur mit derselben Orientierung der Furchen 14 (Fig. 1) und derselben Linienzahl auf. Die Profilhöhe h der Gitterstruktur jeder Teilfläche 22 bzw. 23 ist mit einer periodischen Funktion $f_1(y)$ bzw. $f_2(y)$ entlang der y-Achse moduliert. Bei einem ersten Beispiel gilt $f_1(y) = f_2(y + D/2)$, d.h. die beiden Funktionen weisen die gleiche Periode D auf, sind aber gegenseitig um eine halbe Periode versetzt. Die grösste Abmessung der Teilfläche 22 in y-Richtung ist bevorzugt ein ganzzahliges Vielfaches der Periode D. Bei einem zweiten Beispiel weisen beide Funktionen $f_1(y)$ und $f_2(y)$ die gleiche Periode D und den gleichen Wertebereich der Profilhöhen auf, sind aber in ihrer Form unterschiedlich, z.B.

$$f_1(y) = B\left|\sin\left(\frac{2\pi}{D}\,y\right)\right|$$

und

$$f_2(y) = B\sin^2\left(\frac{2\pi}{D}\,y\right).$$

Dies hat zur Folge, dass die Zonen unterschiedlicher Helligkeit in den beiden Teilflächen 22, 23 unter bestimmten Kippwinkeln die gleiche Lage haben, sich jedoch beim Kippen verschieden schnell bewegen. Bei einem dritten Beispiel ist die in der Fig. 12 als gegenseitige Berandung der Teilflächen 22 und 23 sichtbare Linie eine dritte Teilfläche 24, die ein Beugungsgitter mit beispielsweise 1200 Linien/mm enthält. Die Linie erscheint in einem vorbestimmten Kippwinkelbereich in wechselnder Farbe und ausserhalb dieses Kippwinkelbereiches als dunkle Linie. An dieser Linie kann sich der Beobachter orientieren, wenn er die Veränderung der hellen und dunklen Zonen beim Kippen verifiziert. Die Linie stellt ein ortsfestes Element dar, dessen Lage sich beim Kippen nicht ändert, so dass es zur Referenzierung der Bewegung der hellen und/oder dunklen Zonen dienen kann.

Die Fig. 13 zeigt ein weiteres Flächenmuster mit als Linien 25 ausgebildeten Teilflächen. Jede Linie 25 weist eine Gitterstruktur mit einer anderen Orientierung der Furchen 14 (Fig. 1) auf. Die Profilhöhe der Gitterstrukturen ist mit einer periodischen Funktion f(x, y) moduliert. Beim Drehen des Flächenmusters um eine zu seiner Ebene senkrechte Achse leuchtet wenigstens die eine oder andere Linie 25 auf, wobei die Linie 25 entsprechend der Modulation helle und dunkle Zonen gleicher Farbe aufweist, d.h. z.B. als grüne Linie aus unterschiedlich hellen Zonen, also als gestrichelte Linie leuchtet. Die Farbe, in der der Beobachter 12 die Linie wahrnimmt, hängt vom Betrachtungswinkel θ ab. Bei einer Änderung des Betrachtungswinkels θ ändern neben der Farbe auch die Lage und eventuell die Anzahl der Zonen der Linie, die hell oder dunkel erscheinen. Die Funktion f(x, y) kann für jede der als Linien 20 ausgebildeten Teilflächen dieselbe oder aber auch unterschiedlich sein. Zudem kann die Funktion $f_{(x}$, y) dem linienförmigen Element angepasst sein, bsp. derart, dass die Funktion f(x, y) mit dem Weg entlang der Linie periodisch ist. Es versteht sich von selbst, dass die Funktion f(x, y) nicht periodisch zu sein braucht.

Die Fig. 14 zeigt ein weiteres Flächenmuster mit den zwei rechteckförmigen Teilflächen 22 und 23. Innerhalb der Teilfläche 22 ist die Profilhöhe h vom Zentrum des Rechtecks gegen den Rand hin derart symmetrisch festgelegt, dass die Profilhöhe h entlang konzentrischen, gestrichelt gezeichneten Linien 26 konstant ist. Innerhalb der Teilfläche 23 ist die Profilhöhe h bezüglich des Zentrums derart symmetrisch gewählt, dass die Profilhöhe h nur vom Winkel bezüglich der x-Achse, nicht aber vom Abstand vom Zentrum abhängig ist. Die beiden Teilflächen 22 und 23 erzeugen somit beim Drehen und/oder Kippen Muster mit hellen und dunklen Zonen, die einen unterschiedlichen Bewegungsverlauf aufweisen.

Bei einer Weiterbildung dieses Flächenmusters ist die von der Teilfläche 22 belegte Fläche in Punkte gerastert, deren Abmessungen höchstens 0.15 mm betragen. Dabei sind die Punkte nach der Lehre des europäischen Patents EP 330 738 alternierend den Darstellungen der Teilflächen 22 bzw. 23 zugeordnet, so dass im kleinen Rechteck 22 die Helligkeitsveränderung beider Muster erkennbar ist.

Bei den beschriebenen Beispielen wurde die optische Profilhöhe h variiert, indem die geometrische Profilhöhe $h_g$ der Reliefstrukturen 9 (Fig. 1) moduliert, der Brechungsindex der die Reliefstrukturen 9 bedeckenden Lackschicht 5 jedoch konstant belassen wurde. Möglich, wenn auch technologisch aufwendiger, ist auch eine Modulation des Brechungsindexes der Lackschicht 5 oder eine Modulation des Brechungsindexes der Lackschicht 5 und der geometrischen Profilhöhe $h_g$ der Reliefstrukturen 9, um die gewünschte Modulation der optischen Profilhöhe h zu erreichen. Eine Brechungsindexmodulation kann z.B. durch lokales Dotieren der Lackschicht 5 mit einem Farbstoff erreicht werden. Des einfacheren Verständnisses wegen wurden hier bevorzugt Gitterstrukturen mit geradlinigen Furchen beschrieben, obwohl auch gekrümmte Furchen verwendbar sind.

Die Modulation der Profilhöhe h des Gitters mit entweder einer monoton ansteigenden Funktion oder mit einer periodischen Funktion, wobei die Funktion nicht rechteckförmig ist, erzeugt die beschriebene kontinuierliche Wanderung von hellen und dunklen Zonen bei einer Änderung des Betrachtungswinkels. Dabei erscheint das Flächenmuster bei gewöhnlichen Beleuchtungsverhältnissen in Abhängigkeit der Linienzahl des Gitters entweder ausgeprägt farbig mit kräftigen Farben oder, z.B. bei Tageslicht oder im Licht einer Lampe oder Neonröhre, achromatisch in einer Mischfarbe.

Die Nachbildung eines erfindungsgemässen Flächenmusters 1 gestaltet sich schwierig. Holografische Kopierverfahren sind nicht in der Lage, die Profilform und die Profilhöhe der Reliefstrukturen 9 (Fig. 1) nachzubilden, so dass eine derartige Kopie gegenüber dem Original veränderte optische Effekte erzeugt. Da die Reliefstrukturen 9 mit der Lackschicht 5 bedeckt sind, sind ihre geometrische Profilhöhe $h_g$ und ihre Profilform auch nicht direkt messbar.

Das Abtragen der Lackschicht 5 ohne Beschädigung oder Zerstörung der Reliefstrukturen 9 ist sehr schwierig. Somit ist auch die exakte Nachbildung praktisch ausgeschlossen.

**Patentansprüche**

1.  Flächenmuster (1) mit

    -   einer zwischen zwei Lackschichten (5; 7) eines Schichtverbunds (2) eingebetteten Reflexionsschicht (6) mit Beugungsstrukturen zur Erzeugung optisch variabler Effekte, und
    -   mit wenigstens einer in einer von den Koordinaten x und y aufgespannten Ebene des Schichtverbunds (2) sich erstreckenden Teilfläche (15; 22; 23; 24) mit einer mikroskopisch feinen, sichtbares Licht (10) beugenden Reliefstruktur (9), wobei
    -   die geometrische Profilhöhe der Reliefstruktur eine Funktion A(x,y) = g(x, y)•F(x, y) der Koordinaten ist, und die Funktion g(x, y) ein Gitter (G') mit einer konstanten Linienzahl (L) pro Millimeter, mit einer konstanten Profilhöhe (h) und mit geraden oder gekrümmten parallelen Furchen (14) beschreibt, und die Funktion F(x, y) eine wenigstens stückweise stetige, nicht rechteckförmige Modulationsfunktion beschreibt, die sich im stetigen Bereich langsam im Vergleich zum Abstand der Furchen (14) ändert, und wobei
    -   die Profilhöhe (h) des Gitters (G') mit der Funktion F(x, y) so moduliert ist, dass die Teilfläche (15; 22; 23; 24) bei senkrechter Beleuchtung mit weissem Licht (10) unter einem ersten Betrachtungswinkel helle und dunkle Zonen (16; 17; 18; 19) aufweist, und dass sich die Ausdehnung und/oder die Lage und/oder die Zahl der hellen und dunklen Zonen (16; 17; 18; 19) beim Kippen der Ebene des Schichtverbunds (2) mit der Änderung des Kippwinkels in einem vorbestimmten Betrachtungswinkelbereich kontinuierlich ändert.

2.  Flächenmuster (1) nach Anspruch 1,
    **dadurch gekennzeichnet,**
    **dass** die Reliefstrukturen (9) ein Gitter bilden, dessen Linienzahl kleiner als 400 Linien/mm ist, und die Reliefstrukturen (9) weisses Licht (10) so beugen, dass helle Zonen (16; 17; 18) in einem vorbestimmten Betrachtungsbereich im wesentlichen achromatisch erscheinen.

3.  Flächenmuster (1) nach Anspruch 1,
    **dadurch gekennzeichnet,**
    **dass** die Reliefstrukturen (9) ein Gitter bilden, dessen Linienzahl zwischen 400 und 800 Linien/mm liegt, und dass sich die Lage von hellen Zonen (16; 17; 18) beim kontinuierlichen Kippen der Ebene des Schichtverbunds (2) um eine Achse parallel zu den Furchen (14) des Gitters im wesentlichen sprunghaft ändert.

4.  Flächenmuster (1) nach Anspruch 1,
    **dadurch gekennzeichnet,**
    **dass** die Reliefstrukturen (9) ein Gitter mit einer Linienzahl grösser als 800 Linien/mm bilden, das weisses Licht (10) nur in die nullte und in die erste Beugungsordnung beugt, so dass helle Zonen (16; 17; 18) ausgeprägt farbig aufscheinen.

5.  Flächenmuster (1) nach einem der Ansprüche 1 bis 4,
    **dadurch gekennzeichnet,**
    **dass** die Kontur des Flächenmusters (1) oder der Teilfläche (15; 22; 23; 24) ein Gestaltungselement darstellt und dass in der Fläche des Gestaltungselements die Reflexionsschicht (6) als Mattstruktur, als Spiegel oder als Beugungsgitter, das sich von der Reliefstruktur (9) durch wenigstens einen Gitterparameter unterscheidet, ausgebildet ist.

6.  Flächenmuster (1) nach einem der Ansprüche 1 bis 4,
    **dadurch gekennzeichnet,**
    **dass** die Kontur des Flächenmusters (1) oder der Teilfläche (15; 22; 23; 24) ein Gestaltungselement darstellt und dass die Reflexionsschicht (6) in der Fläche des Gestaltungselements lokal entfernt und/oder durch nachträgliches Bedrucken mit einer Farbe verändert ist, so dass die Reflexionsschicht (6) nicht mehr beugungsoptisch wirksam ist.

7.  Flächenmuster (1) nach einem der Ansprüche 1 bis 6,
    **dadurch gekennzeichnet,**
    **dass** die Kontur des Flächenmusters (1) oder der Teilfläche (15; 22; 23; 24) ein Gestaltungselement darstellt und dass eine senkrecht zur Richtung R gemessene Ausdehnung in der Breite B des Flächenmusters (1) oder der Teilfläche (15; 22; 23; 24) proportional zur Modulationsfunktion F(x, y) der Teilfläche (15; 22; 23; 24) moduliert ist.

8. Flächenmuster (1) nach einem der Ansprüche 1 bis 7,
   **dadurch gekennzeichnet,**
   **dass** die Modulationsfunktion F(x, y) von wenigstens einer Teilfläche (15; 22; 23; 24) in einer vorbestimmten Richtung R periodisch ist und eine vorbestimmte Periode D im Millimeterbereich aufweist.

9. Flächenmuster (1) nach Anspruch 8,
   **dadurch gekennzeichnet,**
   **dass** wenigstens eine Teilfläche (15; 22; 23; 24) mit der Modulationsfunktion F(x, y) eine Abmessung in der vorbestimmten Richtung R von einem ganzzahligen Vielfachen der Periode D aufweist.

10. Flächenmuster (1) nach einem der Ansprüche 1 bis 9,
    **dadurch gekennzeichnet,**
    **dass** die Profilform g(x, y) der Reliefstruktur (9) eine Sinusfunktion ist und dass die Modulationsfunktion F(x, y) einen solchen Wertebereich aufweist, dass eine optische Profilhöhe (h) im Bereich von 150 nm bis 900 nm liegt.

11. Flächenmuster (1) nach einem der Ansprüche 1 bis 9,
    **dadurch gekennzeichnet,**
    **dass** die Profilform g(x, y) der Reliefstruktur (9) eine Sägezahnfunktion ist und dass die Modulationsfunktion F(x, y) einen solchen Wertebereich aufweist, dass eine optische Profilhöhe (h) im Bereich von 500 nm bis 1600 nm liegt.

12. Flächenmuster (1) nach einem der Ansprüche 1 bis 11,
    **dadurch gekennzeichnet,**
    **dass** eine erste Teilfläche (15; 22) mit einer ersten Modulationsfunktion $F_1(x, y)$ und wenigstens eine weitere Teilfläche (23; 24) mit einer weiteren Modulationsfunktion $F_2(x, y)$ vorhanden ist, deren Reliefstrukturen (9) sich nur in der Modulationsfunktion $F_1(x, y)$, $F_2(x, y)$ unterscheiden.

13. Flächenmuster (1) nach Anspruch 12,
    **dadurch gekennzeichnet,**
    **dass** eine erste Modulationsfunktion $F_1(x, y)$ der ersten Teilfläche (15; 22) und eine weitere Modulationsfunktion $F_2(x, y)$ der weiteren Teilfläche (23; 24) in einer gemeinsamen vorbestimmten Richtung R periodisch sind und eine gleiche vorbestimmte Periode D im Millimeterbereich aufweisen und dass die erste Modulationsfunktion $F_1(x, y)$ und die weitere Modulationsfunktion $F_2(x, y)$ um einen Bruchteil der Periode D versetzt sind.

14. Flächenmuster (1) nach Anspruch 13,
    **dadurch gekennzeichnet,**
    **dass** die erste Modulationsfunktion $F_1(x, y)$ und die weitere Modulationsfunktion $F_2(x, y)$ um eine halbe Periode D versetzt sind.

15. Flächenmuster (1) nach einem der Ansprüche 12 bis 14,
    **dadurch gekennzeichnet,**
    **dass** die erste Modulationsfunktion $F_1(x, y)$ der ersten Teilfläche (15; 22) und die weitere Modulationsfunktion $F_2(x, y)$ der weiteren Teilfläche (23; 24) innerhalb ihrer Teilflächen linear sind und den gleichen Wertebereich vom Minimalwert zum Maximalwert in entgegengesetzten Richtungen ($R_1$; $R_2$) durchlaufen.

16. Flächenmuster (1) nach einem der Ansprüche 12 bis 15,
    **dadurch gekennzeichnet,**
    **dass** sich die weitere Teilfläche (23; 24) und die erste Teilfläche (15; 22) wenigstens teilweise überlappen, dass im gemeinsamen Bereich der Teilflächen (15; 22; 23; 24) Rasterelemente der ersten Teilfläche (15; 22) und Rasterelemente der weiteren Teilfläche (23; 24) alternierend und entsprechend ihrem Modulationsgrad durch die Modulationsfunktion F1(x, y) bzw. $F_2(x, y)$ angeordnet sind und dass die Rasterelemente wenigstens der weiteren Teilfläche (23; 24) Abmessungen von höchstens 0,15 mm aufweisen.

17. Flächenmuster (1) nach einem der Ansprüche 1 bis 7,
    **dadurch gekennzeichnet,**
    **dass** sich die Modulationsfunktion F(x, y) innerhalb wenigstens einer Teilfläche (15) monoton von einem Extremwert zum benachbarten Extremwert in einer vorbestimmten Richtung (R) verändert.

18. Flächenmuster (1) nach Anspruch 17,
    **dadurch gekennzeichnet,**
    **dass** sich die Modulationsfunktion F(x, y) von einem Punkt innerhalb der Teilfläche in radialer Richtung von einem Extremwert zum benachbarten Extremwert auf der Berandung der Teilfläche (15) verändert.

19. Flächenmuster (1) nach einem der Ansprüche 1 bis 7, 17, 18,
    dadurch gekenneichnet,
    dass die Modulationsfunktion F(x, y) wenigstens ein Ausschnitt einer rotationsymmetrischen Funktion ist.

**Claims**

1. Surface pattern (1) having

   - a reflective layer (6) embedded between two varnish layers (5; 7) of a layer composite (2) and having diffraction structures for producing optically variable effects, and
   - having at least one subarea (15; 22; 23; 24) which extends in a plane of the layer composite (2) spanned by the coordinates x and y and has a microscopically fine relief structure (9) that diffracts visible light (10),
   - the geometric profile height of the relief structure being a function $A(x, y) = g(x, y) \cdot F(x, y)$ of the coordinates, and the function $g(x, y)$ describing a grid (G') with a constant number of lines (L) per millimetre, a constant profile height (h) and straight or curved parallel furrows (14), and the function F(x, y) describing a modulation function which is continuous at least in part and is not a square wave and which, in the continuous area, changes slowly as compared with the spacing between the furrows (14), and
   - the profile height (h) of the grid (G') being modulated with the function F(x, y) in such a way that the subarea (15; 22; 23; 24) has light and dark zones (16; 17; 18; 19) at a first viewing angle under vertical illumination with white light (10), and that, when the plane of the layer composite (2) is tilted, the extent and/or the position and/or the number of light and dark zones (16; 17; 18; 19) changes continuously with the change in the tilt angle in a predetermined viewing angle range.

2. Surface pattern (1) according to Claim 1, **characterized in that** the relief structures (9) form a grid of which the number of lines is less than 400 lines/mm, and the relief structures (9) diffract white light (10) in such a way that light zones (16; 17; 18) appear substantially achromatic in a predetermined viewing range.

3. Surface pattern (1) according to Claim 1, **characterized in that** the relief structures (9) form a grid of which the number of lines is between 400 and 800 lines/mm, and **in that** the position of light zones (16; 17; 18) changes substantially abruptly as the plane of the layer composite (2) is tilted continuously about an axis parallel to the furrows (14) of the grid.

4. Surface pattern (1) according to Claim 1, **characterized in that** the relief structures (9) form a grid with a number of lines greater than 800 lines/mm, which diffracts white light (10) only in the zeroth and the first diffraction order, so that light zones (16; 17; 18) appear distinctly coloured.

5. Surface pattern (1) according to one of Claims 1 to 4, **characterized in that** the contour of the surface pattern (1) or of the subarea (15; 22; 23; 24) represents a configuring element, and **in that** in the area of the configuring element, the reflective layer (6) is formed as a matt structure, as a mirror or as a diffraction grating, which differs from the relief structure (9) by at least one grating parameter.

6. Surface pattern (1) according to one of Claims 1 to 4, **characterized in that** the contour of the surface pattern (1) or of the subarea (15; 22; 23; 24) represents a configuring element, and **in that** the reflective layer (6) is removed locally in the area of the configuring element and/or is changed by means of subsequent printing with a colour, so that the reflective layer (6) is no longer actively optically diffractive.

7. Surface pattern (1) according to one of Claims 1 to 6, **characterized in that** the contour of the surface pattern (1) or of the subarea (15; 22; 23; 24) represents a configuring element, and **in that** an extent, measured at right angles to the direction R, in the width B of the surface pattern (1) or the subarea (15; 22; 23; 24) is modulated in proportion to the modulation function F(x, y) of the subarea (15; 22; 23; 24).

8. Surface pattern (1) according to one of Claims 1 to 7, **characterized in that** the modulation function F(x, y) of at least one subarea (15; 22; 23; 24) is periodic in a predetermined direction R and has a predetermined period D in the millimetre range.

9. Surface pattern (1) according to Claim 8, **characterized in that** at least one subarea (15; 22; 23; 24) having the modulation function F(x, y) has a dimension in the predetermined direction R of an integer multiple of the period D.

10. Surface pattern (1) according to one of Claims 1 to 9, **characterized in that** the profile shape g(x, y) of the relief structure (9) is a sinusoidal function, and **in that** the modulation function F(x, y) has a value range such that an optical profile height (h) lies in the range from 150 nm to 900 nm.

11. Surface pattern (1) according to one of Claims 1 to 9, **characterized in that** the profile shape g(x, y) of the relief structure (9) is a sawtooth function, and **in that** the modulation function Fix, y) has a value range such that an optical profile height (h) lies in the range from 500 nm to 1600 nm.

12. Surface pattern (1) according to one of Claims 1 to 11, **characterized in that** there is a first subarea (15; 22) with a first modulation function $F_1(x, y)$ and at least one further subarea (23; 24) with a further modulation function $F_2(x, y)$, whose relief structures (9) differ only in the modulation function $F_1(x, y)$, $F_2(x, y)$.

13. Surface pattern (1) according to Claim 12, **characterized in that** a first modulation function $F_1(x, y)$ of the first subarea (15; 22), and a further modulation function $F_2(x, y)$ of the further subarea (23; 24) are periodic in a common predetermined direction R and have the same predetermined period D in the millimetre range, and **in that** the first modulation function $F_1(x, y)$ and the further modulation function $F_2(x, y)$ are offset by a fraction of the period D.

14. Surface pattern (1) according to Claim 13, **characterized in that** the first modulation function $F_1(x, y)$ and the further modulation function $F_2(x, y)$ are offset by half a period D.

15. Surface pattern (1) according to one of Claims 12 to 14, **characterized in that** the first modulation function $F_1(x, y)$ of the first subarea (15; 22), and the further modulation function $F_2(x, y)$ of the further subarea (23; 24) are linear within their subareas and pass through the same value range from the minimum value to the maximum value in opposite directions ($R_1$; $R_2$).

16. Surface pattern (1) according to one of Claims 12 to 15, **characterized in that** the further subarea (23; 24) and the first subarea (15; 22) overlap at least partly, **in that** in the region common to the subareas (15; 22; 23; 24), raster elements of the first subarea (15; 22) and raster elements of the further subarea (23; 24) are arranged to alternate and in accordance with their level of modulation by the modulation function $F_1(x, y)$ and $F_2(x, y)$, and **in that** the raster elements at least of the further subarea (23; 24) have dimensions of at most 0.15 mm.

17. Surface pattern (1) according to one of Claims 1 to 7, **characterized in that** the modulation function F(x, y) within at least one subarea (15) changes monotonically from one extreme value to the adjacent extreme value in a predetermined direction (R).

18. Surface pattern (1) according to Claim 17, **characterized in that** the modulation function F(x, y) changes from a point within the subarea in the radial direction from one extreme value to the adjacent extreme value on the edge of the subarea (15).

19. Surface pattern (1) according to one of Claims 1 to 7, 17, 18, **characterized in that** the modulation function F(x, y) is at least an extract from a rotationally symmetrical function.

**Revendications**

1. Motif de surface (1) comprenant

   - une couche de réflexion (6) intercalée entre deux couches de vernis (5 ; 7) d'un produit composite de couches (2) et comportant des structures de diffraction servant à produire des effets optiquement variables, et
   - au moins une surface partielle (15 ; 22 ; 23 ; 24) s'étendant dans un plan, sous-tendu par les coordonnées x et y, du produit-composite de couches (2) et comportant une structure de relief (9) microscopiquement fine et diffractant la lumière visible (10),

- tandis que la hauteur de profil géométrique de la structure de relief est une fonction A(x, y) = g(x, y). F(x, y) des coordonnées, et la fonction g(x, y) décrit un réseau (G') comportant un nombre de lignes (L) par millimètre constant, présentant une hauteur de profil (h) constante et comportant des raies (14) rectilignes ou courbes parallèles, et la fonction F(x, y) décrit une fonction de modulation continue au moins par segments et non rectangulaire qui, dans la zone continue, varie lentement en comparaison de l'espacement des raies (14),
- et que la hauteur de profil (h) du réseau (G') est modulée par la fonction F(x, y) d'une manière telle que, pour un éclairage perpendiculaire en lumière blanche (10), la surface partielle (15'; 22 ; 23 ; 24) comporte des zones claires et sombres (16 ; 17 ; 18 ; 19) sous un premier angle d'observation, et que l'étendue et/ou la position et/ou le nombre des zones claires et sombres (16 ; 17 ; 18 ; 19) varie d'une manière continue, lorsque le plan du produit composite de couches (2) fait l'objet d'une inclinaison, avec la variation de l'angle d'inclinaison dans un domaine angulaire d'observation prédéterminé.

2. Motif de surface (1) suivant la revendication 1, **caractérisé en ce que** les structures de relief (9) forment un réseau dont le nombre de lignes est inférieur à 400 lignes/mm, et les structures de relief (9) diffractent la lumière blanche (10) d'une manière telle que les zones claires (16 ; 17; 18) apparaissent d'une manière essentiellement achromatique dans un domaine d'observation prédéterminé.

3. Motif de surface (1) suivant la revendication 1, **caractérisé en ce que** les structures de relief (9) forment un réseau dont le nombre de lignes est compris entre 400 et 800 lignes/mm, et **en ce que**, lorsque le plan du produit composite de couches (2) fait l'objet d'un basculement continu autour d'un axe parallèle aux raies (14) du réseau, la position des zones claires (16 ; 17 ; 18) varie d'une manière essentiellement brusque.

4. Motif de surface (1) suivant la revendication 1, **caractérisé en ce que** les structures de relief (9) forment un réseau à nombre de lignes supérieur à 800 lignes/mm qui ne diffracte la lumière blanche (10) que dans l'ordre de diffraction zéro et dans le premier ordre de diffraction, de sorte que les zones claires (16 ; 17 ; 18) apparaissent colorées d'une manière qui ressort.

5. Motif de surface (1) suivant l'une quelconque des revendications 1 à 4, **caractérisé en ce que** le contour du motif de surface (1) ou de la surface partielle (15 ; 22 ; 23 ; 24) constitue un élément de configuration et **en ce que**, dans la surface de l'élément de configuration, la couche de réflexion (6) est réalisée sous forme de structure matte, sous forme de miroir ou sous forme de réseau de diffraction, qui se distingue de la structure de relief (9) par au moins un paramètre de réseau.

6. Motif de surface (1) suivant l'une des revendications 1 à 4, **caractérisé en ce que** le contour du motif de surface (1) ou de la surface partielle (15 ; 22 ; 23 ; 24) constitue un élément de configuration et **en ce que**, dans la surface de l'élément de configuration, la couche de réflexion (6) est ôtée localement et/ou est modifiée par impression après-coup au moyen d'une couleur, de sorte que la couche de réflexion (6) ne présente plus d'activité optique de diffraction.

7. Motif de surface (1) suivant l'une des revendications 1 à 6, **caractérisé en ce que** le contour du motif de surface (1) ou de la surface partielle (15 ; 22 ; 23 ; 24) constitue un élément de configuration et **en ce que** l'étendue, mesurée perpendiculairement à la direction R, de la largeur B du motif de surface (1) ou de la surface partielle (15 ; 22 ; 23 ; 24) est modulée d'une manière proportionnelle à la fonction de modulation F(x, y) de la surface partielle (15 ; 22 ; 23 ; 24).

8. Motif de surface (1) suivant l'une des revendications 1 à 7, **caractérise en ce que** la fonction de modulation F(x, y) d'au moins une surface partielle (15 ; 22 ; 23 ; 24) est périodique dans une direction R prédéterminée et présente une période D prédéterminée dans le domaine des millimètres.

9. Motif de surface (1) suivant la revendication 8, **caractérisé en ce qu'**au moins une surface partielle (15 ; 22 ; 23 ; 24) ayant la fonction de modulation F(x, y) présente une dimension dans la direction R prédéterminée qui est un multiple entier de la période D.

10. Motif de surface (1) suivant l'une des revendications 1 à 9, **caractérisé en ce que** la forme de profil g(x, y) de la structure de relief (9) est une fonction sinusoïdale et **en ce que** la fonction de modulation F(x, y) comporte un domaine de valeurs tel qu'une hauteur de profil optique (h) est située dans le domaine de 150 nm à 900 nm.

**11.** Motif de surface (1) suivant l'une des revendications 1 à 9, **caractérisé en ce que** la forme de profil g(x, y) de la structure de relief (9) est une fonction en dents de scie et **en ce que** la fonction de modulation F(x, y) présente un domaine de valeurs tel qu'une hauteur de profil optique (h) est située dans le domaine de 500 nm à 1600 nm.

**12.** Motif de surface (1) suivant l'une des revendications 1 à 11, **caractérisé en ce qu'**il est prévu une première surface partielle (15 ; 22) ayant une première fonction de modulation $F_1(x, y)$ et au moins une autre surface partielle (23 ; 24) ayant une autre fonction de modulation $F_2(x, y)$, dont les structures de relief (9) ne se distinguent que par la fonction de modulation $F_1(x, y)$, F2(x, y).

**13.** Motif de surface (1) suivant la revendication 12, **caractérisé en ce qu'**une première fonction de modulation $F_1(x, y)$ de la première surface partielle (15 ; 22) et une autre fonction de modulation $F_2(x, y)$) de l'autre surface partielle (23 ; 24) sont périodiques dans une direction R prédéterminée commune et présentent une même période D prédéterminée dans le domaine des millimètres et **en ce que** la première fonction de modulation $F_1(x, y)$ et l'autre fonction de modulation $F_2(x, y)$ sont décalées d'une fraction de la période D.

**14.** Motif de surface (1) suivant la revendication 13, **caractérisé en ce que** la première fonction de modulation $F_1(x, y)$ et l'autre fonction de modulation $F_2(x, y)$ sont décalées d'une moitié de la période D.

**15.** Motif de surface (1) suivant l'une des revendications 12 à 14, **caractérisé en ce que** la première fonction de modulation $F_1(x, y)$ de la première surface partielle (15 ; 22) et l'autre fonction de modulation $F_2(x, y)$) de l'autre surface partielle (23 ; 24) sont linéaires dans les limites de leurs surfaces partielles et traversent le même domaine de valeurs allant de la valeur minimale à la valeur maximale suivant des directions opposées ($R_1$ ; $R_2$).

**16.** Motif de surface (1) suivant l'une des revendications 12 à 15, **caractérisé en ce que** l'autre surface partielle (23 ; 24) et la première surface partielle (15 ; 22) se recouvrent au moins partiellement, **en ce que**, dans le domaine commun des surfaces partielles (15 ; 22 ; 23 ; 24), des éléments de réseau de la première surface partielle (15 ; 22) et des éléments de réseau de l'autre surface partielle (23 ; 24) sont disposés d'une façon alternée et d'une manière correspondant à leur degré de modulation par la fonction de modulation $F_1(x, y)$ ou $F_2(x, y)$ et **en ce que** les éléments de réseau d'au moins l'autre surface partielle (23 ; 24) ont des dimensions d'au maximum 0,15 mm.

**17.** Motif de surface (1) suivant l'une des revendications 1 à 7, **caractérisé en ce que**, dans les limites d'au moins une surface partielle (15), la fonction de modulation F(x, y) varie d'une manière monotone d'une valeur extrême à la valeur extrême voisine suivant une direction prédéterminée (R).

**18.** Motif de surface (1) suivant la revendication 17, **caractérisé en ce qu'**à partir d'un point situé à l'intérieur de la surface partielle et suivant une direction radiale, la fonction de modulation F(x, y) varie d'une valeur extrême à la valeur extrême voisine vers la bordure de la surface partielle (15).

**19.** Motif de surface (1) suivant l'une des revendications 1 à 7, 17, 18, **caractérisé en ce que** la fonction de modulation F(x, y) est au moins un segment d'une fonction à symétrie de rotation.

## Fig.1

## Fig.2

**Fig. 3a**

$\lambda_1 = 420$ nm

**Fig. 3b**

$\lambda_2 = 550$ nm

**Fig. 3c**

$\lambda_3 = 690$ nm

**Fig. 3d**

**Fig. 4a**

**Fig. 4b**

**Fig. 5a**

**Fig. 5b**

**Fig. 5c**

**Fig. 6**

**Fig. 7**

**Fig. 8**

h [n m]

500

250

X

h [nm]                    h [nm]                    h [nm]

500        λ=450nm    500        λ=550nm    500        λ=650nm

250                        250                        250

0                          0                          0

Y                                          19        **Fig. 9a**

                                           16

Y                                          19        **Fig. 9b**

                                           17

Y                                          18        **Fig. 9c**

                                           19

**Fig. 10** a                              **Fig. 10** b

1                                          1

B(y)                              D                                  D

20                                         21

Fig. 11

Fig. 12

Fig. 13

Fig. 14